# EUROPÄISCHE PATENTSCHRIFT

(11) **EP 1 530 524 B1**
(45) Veröffentlichungstag und Bekanntmachung des Hinweises auf die Patenterteilung: **20.06.2007**
(21) Anmeldenummer: 03704313.0
(22) Anmeldetag: 17.02.2003
(51) Int. Cl.: B60R 21/01

(54) **VERFAHREN UND VORRICHTUNG ZUM ADAPTIVEN AUSLOSEN VON RÜCKHALTEMITTELN**
METHOD AND DEVICE FOR ADAPTIVELY TRIGGERING RESTRAINT MEANS
PROCEDE ET DISPOSITIF POUR LE DECLENCHEMENT ADAPTATIF DE DISPOSITIFS DE RETENUE

(30) Priorität: 06.07.2002 DE 10230486
(43) Veröffentlichungstag der Anmeldung: 18.05.2005
(73) Patentinhaber: ROBERT BOSCH GMBH, 70442 Stuttgart (DE)
(72) Erfinder: BALZER, Knut, 71717 Beilstein (DE); HERRMANN, Thomas, 74613 Oehringen (DE); MATTES, Bernhard, 74343 Sachsenheim (DE)
(86) Internationale Anmeldenummer: PCT/DE2003/000466
(87) Internationale Veröffentlichungsnummer: WO 2004/005081

(56) Entgegenhaltungen:
- WO-A-02/08022
- DE-A- 10 103 401
- DE-A- 19 856 129
- US-A1- 2002 062 185

## Beschreibung

### Stand der Technik

Die Erfindung betrifft ein Verfahren und eine Vorrichtung zum adaptiven Auslösen von Rückhaltemitteln in einem Kraftfahrzeug, wobei personenbezogene Daten berücksichtigt werden.

Aus der Praxis sind bereits verschiedene Varianten eines adaptiven Auslösens von Rückhaltemitteln bekannt. So werden die einzelnen Rückhaltemittel in einem Kraftfahrzeug in der Regel in Abhängigkeit vom Unfalltyp und/oder der Schwere des Unfalls ausgelöst. Des Weiteren ist es bekannt, beim Auslösen der Rückhaltemittel die Art der Sitzbelegung, also beispielsweise einen Kindersitz, und das Gewicht der Insassen zu berücksichtigen. Dazu wird die Druckverteilung im Sitz mit Hilfe einer im Sitz verbauten Drucksensormatte erfasst und ausgewertet. Die dabei gewonnenen Informationen werden einem Steuergerät zur Verfügung gestellt, das die Auslösesignale für die Rückhaltemittel generiert. Diese personenbezogene Adaption ermöglicht eine individuelle Anpassung der Wirkung der einzelnen Rückhaltemittel, wie z.B. der Gurtkraft oder des Druckanstiegs in einem Airbag, an die Belastbarkeit des Fahrzeuginsassen. Dadurch wird das Verletzungsrisiko für den Fahrzeuginsassen, das durch das Auslösen der Rückhaltemittel bedingt ist, verringert.

Aus WO 02/08022 A2 ist es bekannt, ein Bildgebendes System zur Identifikation und Überwachung einer Person in einem Fahrzeug vorzusehen. Dabei wird eines Gesichtserkennungssoftware und entsprechende Algorithmen verwendet. Damit ist es möglich, einen Airbag adaptiv auszulösen.

### Vorteile der Erfindung

Mit der vorliegenden Erfindung werden Maßnahmen zur Optimierung der Rückhaltewirkung der einzelnen Rückhaltemittel vorgeschlagen, die eine weitere Anpassung an die individuellen Bedürfnisse der Fahrzeugbenutzer und insbesondere an deren Belastbarkeit ermöglichen.

Dies wird erfindungsgemäß dadurch erreicht, dass bei einer Änderung der Sitzbelegung eine Benutzeridentifikation (Personal Identification - PID) für den mindestens einen betroffenen Sitz durchgeführt wird, dass ein Datenträger vorgesehen ist, auf dem beim Auslösen der Rückhaltemittel zu berücksichtigende, personenbezogene Daten von mindestens einem zugangsberechtigten Benutzer des Kraftfahrzeugs abgespeichert sind, und dass bei erfolgreicher Benutzeridentifikation die entsprechenden personenbezogenen Daten vom Datenträger abgerufen werden. Dementsprechend umfasst die erfindungsgemäße Vorrichtung zum adaptiven Auslösen von Rückhaltemitteln in einem Kraftfahrzeug neben einem Steuergerät zum Generieren eines Auslösesignals für die Rückhaltemittel Mittel zum Erkennen einer Änderung der Sitzbelegung und ein Erkennungssystem zur Benutzeridentifikation, wobei das Erkennungssystem mindestens einen Datenträger umfasst, auf dem beim Auslösen der Rückhaltemittel zu berücksichtigende, personenbezogene Daten abgespeichert sind.

Es ist erkannt worden, dass ein Kraftfahrzeug in der Regel nur von einer sehr überschaubaren Gruppe von Personen genutzt wird. Des Weiteren ist erkannt worden, dass sich eine Reihe von personenbezogenen Daten, die sinnvoller Weise beim Auslösen der Rückhaltemittel berücksichtigt werden sollten, wie z.B. das Alter oder eine Schwangerschaft, nicht ohne Weiteres automatisch, mit Hilfe eines entsprechenden Sensors erfassen lassen. Davon ausgehend wird erfindungsgemäß vorgeschlagen, personenbezogene Daten von zugangsberechtigten Fahrzeugbenutzern auf einem Datenträger abzuspeichern und diese beim Auslösen der Rückhaltemittel zu berücksichtigen, sofern ein Fahrzeuginsasse eindeutig identifiziert worden ist.

Das erfindungsgemäße Konzept kann beispielsweise einfach durch eine Kopplung mit einem ohnehin vorhandenen System zur Benutzeridentifikation realisiert werden. Derartige Systeme werden derzeit beispielsweise zur Prüfung der Zugangs- bzw. Zugriffsberechtigung eingesetzt oder zur Durchführung von Komfortfunktionen, wie z.B. einer automatischen individuellen Sitz- und/oder Spiegeleinstellung.

Die Identifikation des Fahrers ermöglicht dann auch eine Optimierung der Rückhaltemittel für den Fahrer. Genauso ist aber auch eine Realisierung des erfindungsgemäßen Konzepts in Form eines unabhängigen Moduls denkbar.

Wie bereits erwähnt, werden im Rahmen des erfindungsgemäßen Verfahrens vorteilhafter Weise personenbezogene Daten auf dem Datenträger abgespeichert, die Rückschlüsse auf die individuelle Belastbarkeit der einzelnen zugangsberechtigten Benutzer des Kraftfahrzeugs zulassen. Diese personenbezogenen Daten sollten insbesondere solche Informationen wiedergeben, die sich nicht ohne weiteres automatisch, mit Hilfe einer entsprechenden Sensorik erfassen lassen, wie z.B. Geburtdatum bzw. Alter, Geschlecht, Gesundheitszustand, Lebenssituation, wie beispielsweise eine etwaige Schwangerschaft, Körpergröße und/oder Körpergewicht.

Grundsätzlich stehen sowohl für das Erkennen einer Änderung der Sitzbelegung als auch für die Benutzeridentifikation verschiedene Verfahren zur Verfügung. Wesentlich in diesem Zusammenhang ist, dass immer dann, wenn eine Änderung der Sitzbelegung erkannt worden ist, eine Benutzeridentifikation initiiert wird. Eine Änderung der Sitzbelegung kann beispielsweise anhand der Druckverteilung im Sitz in Kombination mit einem Sensor ermittelt werden, der das Öffnen und Schließen der nächstgelegenen Fahrzeugtür erfasst.

In dem erfindungsgemäßen Verfahren erfolgt die Benutzeridentifikation mit Hilfe einer Chipkarte, die auch als Datenträger für die personenbezogenen Daten dient. Dies erweist sich insbesondere dann als vorteilhaft, wenn das Kraftfahrzeug ohnehin mit einem entsprechenden System zur Benutzeridentifikation ausgestattet ist. Derartige Chipkarten mit integriertem Transponder werden in der Praxis nämlich bereits eingesetzt, um Zugang zum Fahrzeug zu erhalten, dieses starten und fortbewegen zu können und ggf. die Sitz- und Spiegeleinstellung für die jeweilige benutzungsberechtigte Person automatisch anzupassen. Erfindungsgemäß werden auf einer solchen Chipkarte auch die personenbezogenen Daten abgespeichert, die beim Auslösen der Rückhaltemittel berücksichtigt werden sollen. Mit Hilfe des Transponders werden sie bei Annäherung an das Kraftfahrzeug übertragen. Zur Nutzung werden sie allerdings nur freigegeben bzw. an das Steuergerät weitergeleitet, wenn der Benutzer identifiziert werden kann.

In einer anderen Variante des erfindungsgemäßen Verfahrens erfolgt die Benutzeridentifikation anhand von unveränderlichen körperlichen Merkmalen des Benutzers, insbesondere anhand der Iris oder eines Fingerabdrucks, beispielsweise mit Hilfe eines entsprechenden Sensors im Schalthebelknauf oder den Gurtzungengriffen. In diesem Fall erweist es sich als vorteilhaft, die personenbezogenen Daten, die beim Auslösen der Rückhaltemittel berücksichtigt werden sollen, auf einem Datenträger im Kraftfahrzeug abzuspeichern. Bei eindeutiger Identifizierung eines Benutzers, können die entsprechenden personenbezogenen Daten dann einfach von diesem Datenträger abgerufen werden.

Wenn mehrere Personen in das Kraftfahrzeug einsteigen, müssen die einzelnen Fahrzeuginsassen nicht nur identifiziert werden sondern auch einem definierten Sitzplatz im Fahrzeuginnenraum zugeordnet werden. Nur dann kann das Auslöseverhalten der Rückhaltemittel individuell an die Sitzbelegung angepasst werden. In diesen Fällen erfolgt die Benutzeridentifikation in vorteilhafter Weise mit Hilfe eines Erkennungssystems, das jeden Benutzer bzw. dessen personenbezogene Daten aufgrund der Fahrzeugtür, durch die der Benutzer eingestiegen ist, einem definierten Sitzplatz im Kraftfahrzeug zuordnet.

### Zeichnung

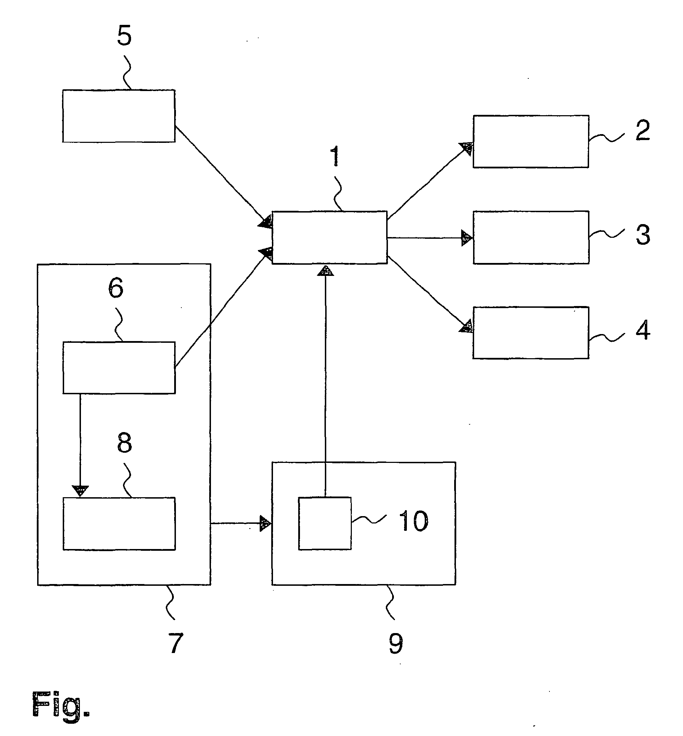

Wie bereits voranstehend ausführlich erörtert, gibt es verschiedene Möglichkeiten, die Lehre der vorliegenden Erfindung in vorteilhafter Weise auszugestalten und weiterzubilden. Dazu wird einerseits auf die den unabhängigen Patentansprüchen nachgeordneten Patentansprüche und andererseits auf die nachfolgende Beschreibung eines Ausführungsbeispiels der Erfindung anhand der Zeichnung verwiesen.

Die einzige Figur zeigt das Blockschaltbild einer erfindungsgemäßen Vorrichtung zum adaptiven Auslösen von Rückhaltemitteln in einem Kraftfahrzeug.

### Beschreibung des Ausführungsbeispiels

Die in der einzigen Figur dargestellte erfindungsgemäße Vorrichtung zum adaptiven Auslösen von Rückhaltemitteln in einem Kraftfahrzeug umfasst ein Steuergerät 1 als zentrales Element, das sämtliche Rückhaltemittel im Kraftfahrzeug koordiniert. Die Rückhaltemittel sind in der Regel den einzelnen Sitzplätzen im Kraftfahrzeug zugeordnet. Aus Gründen der Übersichtlichkeit sind hier jedoch lediglich der Gurtstraffer 2, der Frontairbag 3 und der Seitenairbag 4 für einen Sitzplatz, beispielsweise den Fahrersitz, dargestellt. Selbstverständlich können die Rückhaltemittel für die einzelnen Sitzplätze in einem Kraftfahrzeug unterschiedlich und anders als dargestellt konfiguriert sein. Insbesondere können die Rückhaltemittel für einen Sitzplatz auch noch weitere Komponenten umfassen.

Im hier dargestellten Ausführungsbeispiel werden dem Steuergerät 1 zum einen Daten über die Art und Schwere eines Unfalls zugeleitet, die von einer ersten Sensorik 5 erfasst werden. Zum anderen werden dem Steuergerät 1 Daten über die Druckverteilung in den einzelnen Sitzen übermittelt, die von einer zweiten in den Sitzen verbauten Sensorik 6 erfasst werden. Anhand der jeweiligen Druckverteilung im Sitz kann zunächst ermittelt werden, ob der Sitz überhaupt belegt ist. Daneben kann die Art der Sitzbelegung ermittelt werden, also beispielsweise ob ein Kindersitz installiert ist. Außerdem kann eine Gewichtsklassifizierung der Insassen vorgenommen werden. Ggf. können anhand der Druckverteilung im Sitz sogar Aussagen über die Körperhaltung eines Insassen gemacht werden. In der Figur ist lediglich die Sensorik 6 für den mit den Rückhaltemitteln 2, 3 und 4 ausgestatteten Sitzplatz dargestellt.

Die Informationen über die Sitzbelegung, die mit Hilfe der Sensorik 6 gewonnen werden, werden im hier dargestellten Ausführungsbeispiel außerdem dazu genutzt, eine Änderung der Sitzbelegung zu erkennen. Dementsprechend ist die Sensorik 6 Bestandteil von mit 7 bezeichneten Mitteln zum automatischen Erkennen einer Änderung der Sitzbelegung. Diese Mittel 7 umfassen ferner eine Sensorik 8, mit der eine Betätigung der einzelnen Fahrzeugtüren erfasst wird. Eine Änderung der Sitzbelegung wird hier beispielsweise immer dann angenommen, wenn sich sowohl die Druckverteilung in einem Sitz signifikant verändert hat als auch die dem Sitz nächstgelegene Fahrzeugtür betätigt worden ist.

Des Weiteren ist ein Erkennungssystem 9 zur Benutzeridentifikation vorgesehen, das einen Datenträger 10 umfasst. Erfindungsgemäß sind auf diesem Datenträger 10 weitere beim Auslösen der Rückhaltemittel 2, 3 und 4 zu berücksichtigende, personenbezogene Daten abgespeichert.

Wenn die Mittel 7 eine Änderung der Sitzbelegung erkennen, wird eine Benutzeridentifikation für den betroffenen Sitzplatz initiiert. Eine derartige Identifikation kann beispielsweise mit Hilfe einer Chipkarte erfolgen, mit der sich der Benutzer gegenüber dem Erkennungssystem 9 ausweist, wie es beispielsweise von Keyless-Entry-Systemen bekannt ist. In diesem Fall können auch die personenbezogenen Daten, die beim Auslösen der Rückhaltemittel 2, 3 und 4 berücksichtigt werden sollen, auf der Chipkarte abgespeichert werden. Wenn der Benutzer zugangsberechtigt ist, werden diese Daten, beispielsweise mittels Transponder, an das Steuergerät 1 übertragen. Eine Benutzeridentifikation kann aber beispielsweise auch auf der Grundlage von unveränderlichen körperlichen Merkmalen vorgenommen werden, wie z.B. einem Fingerabdruck oder der Iris. In diesem Fall muss das Erkennungssystem 9 mit einer entsprechenden Sensorik ausgestattet sein. Die beim Auslösen der Rückhaltemittel zu berücksichtigenden, personenbezogenen Daten der zugangsberechtigten Benutzer werden dann bevorzugt auf einem Datenträger im Kraftfahrzeug abgespeichert und nur bei eindeutiger Identifikation eines Insassen an das Steuergerät 1 übertragen.

Auf der Grundlage der mit Hilfe der Sensorik 5 und der Sensorik 6 gewonnenen Informationen und unter Berücksichtigung der auf dem Datenträger 10 abgespeicherten personenbezogenen Daten generiert das Steuergerät 1 im Falle eines Unfalls die Auslösesignale für die einzelnen Rückhaltemittel 2, 3 und 4.

Bei zwei oder mehr Fahrzeuginsassen ist ein verlässliches adaptives Auslösen der Rückhaltemittel entsprechend dem erfindungsgemäßen Verfahren nur möglich, wenn sich jedem identifizierten Benutzer auch ein definierter Sitzplatz im Fahrzeuginnenraum zuordnen lässt. Diese Voraussetzung kann beispielsweise dadurch erfüllt werden, dass in jeder Fahrzeugtür ein Erkennungssystem eingebaut ist bzw. Mittel zur Benutzeridentifikation vorgesehen sind. Jedem Benutzer kann dann einfach der Sitzplatz im Fahrzeuginnenraum zugeordnet werden, der neben der Fahrzeugtür liegt, durch die der Benutzer eingestiegen ist, sofern durch jede Fahrzeugtür maximal ein Benutzer eingestiegen ist. Auf diese Weise können die personenbezogenen Daten eines identifizierten Benutzers auch den entsprechenden Rückhaltemitteln zugeordnet werden.

Die auf einer Chipkarte abgespeicherten personenbezogenen Daten werden nur dann an das Steuergerät übertragen und so dem Insassenschutzsystem zur Verfügung gestellt, wenn zumindest ein Teil der abgespeicherten Daten mit sensierten personenbezogenen Daten, wie z.B. Gewicht, Fingerabdruck, Iris, etc., übereinstimmt. Dadurch soll eine fehlerhafte Anpassung der Rückhaltemittel für den Fall verhindert werden, dass die Chipkarte nicht von ihrem Inhaber benutzt wird.

Steigen zwei oder mehr Personen durch die gleiche Tür in das Fahrzeug ein und nicht wieder aus, so werden die einzelnen Personen in umgekehrter Einsteigreihenfolge den Fahrzeugsitzen in Richtung Fahrzeuginnenraum zugeordnet. Steigen also beispielsweise drei Personen durch die hintere rechte Tür ein, so wird dem Sitzplatz unmittelbar neben der hinteren rechten Tür die dritte Person, die zuletzt eingestiegen ist, zugeordnet. Die zweite Person wird dem weiter im Fahrzeuginnenraum befindlichen, mittleren Sitzplatz zugeordnet und die Person, die als erste eingestiegen ist, wird dem noch weiter im Fahrzeuginnenraum befindlichen Sitzplatz neben der hinteren linken Tür zugeordnet. Steigen mehr als drei Personen durch die hinteren Fahrzeugtüren ein, so kann zumindest der mittlere Sitzplatz nicht ohne Weiteres eindeutig zugeordnet werden. Diese Unsicherheit könnte allerdings einfach mit Hilfe von Fingerabdrucksensoren an allen Gurtzungengriffen ausgeräumt werden. Da in diesem Fall jeder Insasse beim Betätigen seines Sicherheitsgurtes identifiziert wird, kann er auch einem definierten Sitzplatz zugeordnet werden.

In der Praxis wird es nicht immer möglich sein, alle Insassen eindeutig zu identifizieren oder einem definierten Sitzplatz im Fahrzeuginnenraum zuzuordnen. Außerdem werden auch nicht für alle identifizierten Benutzer personenbezogene Daten zur Verfügung stehen, die beim Auslösen der Rückhaltemittel berücksichtigt werden sollen. In diesen Fällen werden die Rückhaltemittel lediglich in Abhängigkeit der übrigen zur Verfügung stehenden Informationen über Unfallart und Schwere des Unfalls sowie ggf. die Druckverteilung im Sitz ausgelöst und u.U. auch nur entsprechend einer Defaulteinstellung.

## Patentansprüche

1. Verfahren zum adaptiven Auslösen von Rückhaltemitteln in einem Kraftfahrzeug, wobei personenbezogene Daten berücksichtigt werden, wobei bei einer Änderung der Sitzbelegung eine Benutzeridentifikation für den mindestens einen betroffenen Sitz durchgeführt wird, wobei ein Datenträger vorgesehen ist, auf dem beim Auslösen der Rückhaltemittel zu berücksichtigenden, personenbezogenen Daten von mindestens einem zugangsberechtigten Benutzer des Kraftfahrzeugs abgespeichert sind und bei erfolgreicher Benutzeridentifikation die entsprechenden personenbezogenen Daten vom Datenträger abgerufen werden, **dadurch gekennzeichnet, dass** die Benutzeridentifikation mit Hilfe einer Chipkarte erfolgt, die auch als Datenträger für die personenbezogenen Daten dient.

2. Verfahren nach Anspruch 1, **dadurch gekennzeichnet, dass** als personenbezogene Daten Informationen über die Belastbarkeit des jeweiligen Benutzers auf dem Datenträger angespeichert werden, insbesondere in Form von Geburtsdatum bzw. Alter, Geschlecht, Gesundheitszustand, Lebenssituation, wie zum Beispiel eine etwaige Schwangerschaft, Körpergröße und/oder Körpergewicht.

3. Verfahren nach Anspruch 1, **dadurch gekennzeichnet, dass** die personenbezogenen Daten mittels Transponder an das Kraftfahrzeug übertragen werden.

4. Verfahren nach einem der Ansprüche 1 bis 3, **dadurch gekennzeichnet, dass** die Benutzeridentifikation mit Hilfe eines Erkennungssystems erfolgt, das jeden Benutzer bzw. dessen personenbezogenen Daten aufgrund der Fahrzeugtür, durch die der Benutzer eingestiegen ist, einem definierten Sitzplatz im Kraftfahrzeug zuordnet.

5. Vorrichtung zum adaptiven Auslösen von Rückhaltemitteln in einem Kraftfahrzeug mit einem Steuergerät (1) zum Generieren eines Auslösesignals für die Rückhaltemittel (2, 3, 4) mit Mitteln (7) zum Erkennen einer Änderung der Sitzbelegung und ein Erkennungssystem (9) zur Benutzeridentifikation, wobei das Erkennungssystem (9) mindestens einen Datenträger (10) umfasst, auf dem beim Auslösen der Rückhaltemittel (2, 3, 4) zu berücksichtigende, personenbezogene Daten abgespeichert sind und, **dadurch gekennzeichnet, dass** das Erkennungssystem (9) mindestens eine Chipkarte umfasst, die auch als Datenträger (10) für die beim Auslösen der Rückhaltemittel (2, 3, 4) zu berücksichtigenden, personenbezogenen Daten eines zugangsberechtigten Benutzers dient.

6. Vorrichtung nach Anspruch 5, **dadurch gekennzeichnet, dass** die beim Auslösen der Rückhaltemittel (2, 3, 4) zu berücksichtigenden, personenbezogenen Daten eines zugangsberechtigten Benutzers auf einem Datenträger (10) im Kraftfahrzeug abgespeichert sind.

## Claims

1. Method for adaptively triggering restraint means in a motor vehicle, person-related data being taken into account, a user identification process being carried out for the at least one affected seat if the seat occupation changes, a data carrier being provided on which person-related data of at least one access-authorized user of the motor vehicle which is to be taken into account when the restraint means triggers is stored, and the respective person-related data is called up from the data carrier when successful user identification occurs, **characterized in that** the user identification process is carried out using a chip card which also serves as a data carrier for the person-related data.

2. Method according to Claim 1, **characterized in that** information about the loadability of the respective user is stored on the data carrier as person-related data, in particular in the form of date of birth or age, sex, state of health, life situations such as, for example, if applicable pregnancy, body size and/or body weight.

3. Method according to Claim 1, **characterized in that** the person-related data is transmitted to the motor vehicle by means of a transponder.

4. Method according to one of Claims 1 to 3, **characterized in that** the user identification is provided using a detection system which assigns each user or their person-related data to a defined seating place in the motor vehicle on the basis of the vehicle door through which the user has entered.

5. Device for adaptively triggering restraint means in a motor vehicle, having a control device (1) for generating a triggering signal for the restraint means (2, 3, 4) with means (7) for detecting a change in the seat occupation and a detection system (9) for the user identification process, the detection system (9) comprising at least one data carrier (10) on which person-related data which is to be taken into account when the restraint means (2, 3, 4) triggers is stored, and the detection system (9) comprising at least one chip card which also serves as a data carrier (10) for the person-related data of an access-authorized user which is to be taken into account when the restraint means (2, 3, 4) triggers.

6. Device according to Claim 5, **characterized in that** the person-related data of an access-authorized user which is to be taken into account when the restraint means (2, 3, 4) triggers is stored on a data carrier (10) in the motor vehicle.

## Revendications

1. Procédé pour le déclenchement adaptatif de dispositifs de retenue dans un véhicule automobile, selon lequel des données personnelles sont prises en compte, et en cas de modification de l'occupation des places, on effectue une identification de l'occupant d'au moins un siège concerné, à l'aide d'un support de données sur lequel on mémorise les données personnelles concernant au moins un occupant du véhicule automobile pour lequel l'accès est autorisé et qui sont à prendre en considération lors du déclenchement des dispositifs de retenue et, l'occupant étant identifié, ses données personnelles appropriées sont lues à partir du support de données,
**caractérisé en ce que**
l'identification de l'occupant s'effectue au moyen d'une carte à puce servant également de support de données personnelles.

2. Procédé selon la revendication 1,
**caractérisé en ce que**
les données personnelles mémorisées sur le support de données sont des informations concernant la limite de résistance de l'occupant respectif, notamment sous la forme de la date de naissance ou de l'âge, du sexe, de l'état de santé, de la situation de vie, comme par exemple une éventuelle grossesse, de la taille et/ou de la masse corporelle.

3. Procédé selon la revendication 1,
**caractérisé en ce que**
les données personnelles sont transmises au véhicule automobile au moyen d'un transpondeur.

4. Procédé selon l'une des revendications 1 à 3,
**caractérisé en ce que**
l'identification de l'occupant s'effectue au moyen d'un système de reconnaissance qui associe chaque occupant ou les données personnelles de celui-ci à un siège défini dans le véhicule automobile en se fondant sur l'entrée de l'occupant par une portière précise du véhicule.

5. Dispositif pour le déclenchement adaptatif de dispositifs de retenue dans un véhicule automobile, comportant un appareil de commande (1) pour générer un signal de déclenchement des dispositifs de retenue (2, 3, 4), des moyens (7) pour détecter une modification de l'occupation des places et un système de reconnaissance (9) pour identifier les occupants, le système de reconnaissance (9) comportant au moins un support de données (10) sur lequel sont mémorisées des données personnelles à prendre en considération lors du déclenchement des dispositifs de retenue (2, 3, 4) et
**caractérisé en ce que**
le système de reconnaissance (9) comporte au moins une carte à puce servant également de support (10) pour les données personnelles concernant un occupant pour lequel l'accès est autorisé et qui sont à prendre en considération lors du déclenchement des dispositifs de retenue (2, 3, 4).

6. Dispositif selon la revendication 5,
**caractérisé en ce que**
les données personnelles concernant un occupant pour lequel l'accès est autorisé et qui sont à prendre en considération lors du déclenchement des dispositifs de retenue (2, 3, 4) sont mémorisées sur un support de données (10) présent dans le véhicule automobile.
